Europäisches Patentamt

European Patent Office

Office européen des brevets

(11) Veröffentlichungsnummer: **0 279 321**
A2

## (12) EUROPÄISCHE PATENTANMELDUNG

(21) Anmeldenummer: 88101828.7

(22) Anmeldetag: 09.02.88

(51) Int. Cl.4: **B29C 47/20** , B29C 47/06

(30) Priorität: 14.02.87 DE 3704698
20.05.87 DE 3716884

(43) Veröffentlichungstag der Anmeldung:
24.08.88 Patentblatt 88/34

(84) Benannte Vertragsstaaten:
AT BE FR GB GR IT NL SE

(71) Anmelder: BEKUM Maschinenfabriken GmbH
Lankwitzerstrasse 14/15
D-1000 Berlin 42(DE)

(72) Erfinder: Becker, Rudolf
Kornradenstrasse 32
D-1000 Berlin 47(DE)
Erfinder: Pohl, Harald
Kottbusser Damm 79
D-1000 Berlin 61(DE)

(74) Vertreter: Huss, Carl-Hans, Dipl.-Ing.
Patentanwalt Griesstrasse 3 a Postfach 14 54
D-8100 Garmisch-Partenkirchen(DE)

(54) Coextrusionskopf.

(57) Die bisher bekannten Coextrusionsköpfe sind nur zur Verarbeitung von thermisch stabilen Kunststoffschmelzen wie z.B. PP und PE geeignet, weil diese auf Verteilerhülsen mit den bekannten Herzkurvenverteilungen zu Schläuchen geformt werden können. Thermisch empfindliche Kunststoff, wie z.B. PVDC und PET, insbesonders aber Hart-PVC, können in den bekannten Coextrusionsköfpen nicht verarbeitet werden, da das Material im Übergangsbereich der offenen Verteilerkanäle stagnieren und sich durch Wärmeeinfluß innerhalb kurzer Zeit zersetzen würde. Der erfindungsgemäße Coextrusionskopf ermöglicht auch die Verarbeitung von z.B. Hart-PVC durch eine Kombination des Dornhalterprinzips, mit dem ein oben in den Extrusionskopf eingeführter Hart-PVC-Strang zu einem Schlauch geformt wird, mit dem Herzkurvenprinzip, mit dem ins Innere des Hart-PVC-Schlauches eingeführte Materialstränge anderen Materials verarbeitet, z.B. zu einem Sperrschicht-Schlauch und zu Haftvermittlerschicht-Schläuchen geformt werden.

FIG. 2

## Coextrusionskopf

Die Erfindung betrifft einen Coextrusionskopf zur Herstellung einer aus wenigstens zwei, vorzugsweise drei bis sechs Schichten bestehenden Kunststoff-Schlauch-Struktur, deren Außenschicht und Innenschicht aus einem thermisch empfindlichen Material, z.B. Hart-PVC bestehen, zwischen denen entweder eine weitere Schicht aus diesem Material als Mittelschicht oder eine oder mehrere Schichten anderen Materials wie Sperrschicht, Haftvermittlerschichten und Regeneratschicht, angeordnet sein können.

In der Kunststoff-Blasformtechnologie gehören mehrschichtige Schlauchstrukturen, deren Aufbau dem Verwendungszweck des herzustellenden Gegenstandes angepaßt ist, seit einiger Zeit zum Stand der Technik. Diese mehrschichtigen Schlauchstrukturen werden in Coextrusionsköpfen hergestellt, in denen zunächst die einzelnen Schläuche der herzustellenden Schlauchstruktur ausgebildet und dann zusammengeführt werden, bevor die fertige Schlauchstruktur durch eine Düse den Coextrusionskopf verläßt.

In den bisher bekannten Coextrusionsköpfen werden nur thermisch stabile Kunststoffschmelzen, wie z.B. PP und PE sowie gegebenenfalls zugehörige Haft-und Sperrschichten verarbeitet, wobei diese thermisch stabilen Schmelzen von der Seite her in den Extrusionskopf eingebracht und auf sogenannten "Herzkurven" mit einseitig offenen Kanälen auf Pinolen bzw. Verteilerhülsen verteilt und zu Schläuchen geformt werden. Zur Verarbeitung von thermisch empfindlichen Kunststoffmaterialien sind diese bekannten Coextrusionsköpfe nicht geeignet, da solches Material im Übergangsbereich des offenen Kanals zum benachbarten Bauteil stagnieren und sich durch Wärmeeinfluß innerhalb kurzer Zeit zersetzen würde. Um aus einem solchen Kunststoff einen Schlauch zu erzeugen, muß dieser axial gegen einen Dorn geführt werden, der den Strang zu dem gewünschten Schlauch verteilt.

Zu den thermisch empfindlichen Materialien gehört insbesondere das physiologisch unbedenkliche Hart-PVC, aber auch z.B. PVDC und PET. Auch EVAL, das für die Coextrusion bevorzugt als Sperrschicht eingesetzt wird, gehört eigentlich zu dieser Gruppe. Es kann in bekannten Coextrusionsköpfen nur dann ohne Schwierigkeiten verarbeitet werden, wenn es eine sehr dünne innenliegende Schicht bildet, die im Kopf nicht mit heißen Wänden in Berührung gelangt, wie das bei der Verarbeitung als Sperrschicht meist der Fall ist. Da Hart-PVC ein bevorzugtes Anwendungsbeispiel ist, wird zur Vereinfachung der Darstellung nachfolgend nur hierauf Bezug genommen.

Der vorliegenden Erfindung liegt die Aufgabe zugrunde, einen Coextrusionskopf anzugeben, mit dem thermisch instabiles, empfindliches Material, insbesondere Hart-PVC, auch mehrschichtig allein oder zusammen mit anderem Material verarbeitet werden kann, mit dem also z.B. entweder eine aus zwei oder vorzugsweise drei Hart-PVC-Schichten bestehende Schlauchstruktur oder solche herstellbar ist, deren Außenschicht und Innenschicht aus Hart-PVC besteht, wobei zwischen diesen Trägerschichten weitere Schichten, insbesondere eine Sperrschicht mit beidseitigen Haftvermittlerschichten und gegebenenfalls eine Regeneratschicht angeordnet sein sollen.

Diese Aufgabe wird erfindungsgemäß durch die im Kennzeichen des Patentanspruchs 1 angegebenen Merkmale gelöst. Vorteilhafte Weiterbildungen der Erfindung sind in den Unteransprüchen gekennzeichnet.

Bei dem erfindungsgemäßen Coextrusionskopf wird ein Hart-PVC-Strang in einem zentralen Kanal von oben in den Coextrusionskopf eingespeist und auf einem Dorn zu einem Schlauch geformt, der wenigstens die Außenschicht der herzustellenden Schlauchstruktur bildet. Ein weiterer Materialstrang wird seitlich dem Coextrusionskopf zugeführt und tritt durch einen Kanal bis innerhalb des Außenschichtschlauches und, ohne dessen Ausbildung zu beeinträchtigen, in den Kopf ein. Der Kanal kann eine Stegbrücke in einem Dornhalter durchsetzen. Hier kann der eingeführte Materialstrang auf geeignete Weise verteilt und zu einem oder mehreren Schläuchen geformt werden, der bzw. die dann mit dem Außenschichtschlauch zusammengeführt wird bzw. werden.

Wenn die herzustellende Schlauchstruktur aus mehreren Hart-PVC-Schichten besteht, können sowohl der Materialstrang für die Mittelschicht als auch derjenige für die Innenschicht in seitlichen Kanälen in den Coextrusionskopf eingespeist werden. Die Ausbildung wird dann vorteilhafterweise so getroffen, daß der Kanal für den Materialstrang der Mittelschicht durch eine im oberen Bereich des oberen Dornes diesen haltende Stegbrücke zur Kopfmitte führt, wo der Strang von einem mittleren Dorn zu einem Schlauch geformt wird, während der Kanal für den Materialstrang der Innenschicht durch eine zweite Stegbrücke, die im oberen Bereich des mittleren Dornes beide dort vorhandenen Schläuche überbrückt, zur Kopfmitte führt, wo dieser Strang von einem unteren Dorn zu dem Innenschicht-Schlauch geformt wird. Alle drei Schläuche werden dabei koaxial zueinander ausgebildet.

Wenn nach einem weiteren Vorschlag der Erfindung der obere und der mittlere Dorn jeweils hülsenförmige, nach unten sich erweiternde Verlängerungen aufweisen, können die drei Schläuche räumlich voneinander getrennt und damit vollkommen störungsfrei ausgebildet werden, bis sie im Düsenein trittsbereich vereinigt werden. In der Regel bestehen in einem solchen Falle die drei Schläuche aus unterschiedlichen PVC-Materialien, z.B. dasjenige der Außenschicht aus einem naturglasklaren, das der Mittelschicht aus einem perlmuttfarbenen und das der Innenschicht aus einem Hart-PVC enthaltenden Regenerat.

Wenn der erfindungsgemäße Coextrusionskopf neben Hart-PVC-Schichten auch solche aus anderen, thermisch stabilen Kunststoffen, z.B. eine aus fünf Schichten bestehende Schlauchstruktur mit einer mittigen Sperrschicht und beidseitigen Haftschichten ausbilden soll, wird mit großem Vorteil vorgeschlagen, daß der obere Dorn auf einem mit einem umlaufenden Mittelring verbundenen Dornhalter befestigt ist, wobei der Mittelring eine ringförmige, im Querschnitt dachförmige Abdeckung trägt. Diese ringförmige Abdeckung spaltet den am oberen Dorn ausgebildeten Schlauch in zwei konzentrische Schläuche auf, die die Hart-PVC-Innenschicht und die Hart-PVC-Außenschicht der herzustellenden Schlauchstruktur bilden.

Um die Materialstränge für die Schichten aus anderem Material, z.B. die Sperrschicht und die Haftschichten zwischen die beiden Hart-PVC-Schläuche einzuführen, ohne die Ausbildung derselben zu beeinträchtigen, sollten zwei seitliche Kanäle durch Stege in dem den Dorn mit dem Gehäuse des Coextrusionskopfes verbindenden Dornhalter hindurch in den Zwischenraum zwischen den beiden konzentrischen Schläuchen führen. Um dort den dünnen Sperrschichtschlauch und die beiden ebenfalls dünnen Haftschichtschläuche auszubilden, wird mit großem Vorteil vorgeschlagen, daß der radial innere Bereich des Dornhalters in Richtung der Unterseite des Kopfes verlängert ist und daß in diesem verlängerten Ringabschnitt ein Verteilerkanal in Form einer Herzkurve zur Ausbildung des inneren Haftschicht-Schlauches eingefrast ist. Auf diesen verlängerten Ringabschnitt wird ein aus drei Hülsen bestehendes Hülsenpaket aufgeschoben, wobei die innere und die mittlere Hülse je einen in ihrer Außenfläche eingefräsen Verteilerkanal, wiederum in Form einer Herzkurve, aufweisen und der Verteilerkanal der inneren Hülse der Ausbildung des Sperrschicht-Schlauches und der Verteilerkanal der mittleren Hülse der Ausbildung des äußeren Haftschicht-Schlauches dienen. Die äußere Hülse deckt dabei die mittlere Hülse ab und dient gleichzeitig als innere Begrezung für den Außenschicht-Schlauch.

Die beiden seitlichen Kanäle sollten sich zunächst etwa waagerecht ins Innere des Coextrusionskopfes erstrecken und etwa in der Mitte des Dornhalters senkrecht umgelenkt werden, so daß ihr Achsen in der Berührungsfläche der inneren und der mittleren Hülse liegen. Der untere Endabschnitt des den Materialstrang für die Haftschichten führenden Kanals ist so verzweigt, daß die Verzweigungen in die zugehörigen Verteilerkanäle einmünden, während der den Materialstrang für die Sperrschicht führende Kanal direkt in den zugehörigen Verteilerkanal einmündet.

Bei dieser Ausführungsform der Erfindung wird das Hart-PVC durch einen Extruder zunächst als Vollstrang oben in den Coextrusionskopf eingespeist und strömt zentral gegen den oberen Dorn, durch den ein Schlauch erzeugt wird, der auf die Spitze des dachförmigen Ringes auftrifft und in zwei konzentrische Schläuche aufgespalten wird. Zwischen diesen beiden Schläuchen werden in Verteilerkanälen in Form von Herzkurven Schläuche aus den seitlich zugeführten Materialsträngen für die Sperrschicht und die Haftschichten ausgebildet. Im unteren Bereich des Hülsenpaketes werden diese innenliegenden Schichten mit den äußeren PVC-Schichten vereinigt und als aus fünf Schichten bestehende Schlauchstruktur aus dem Coextrusionskopf ausgeführt.

Nach einem weiteren Vorschlag der Erfindung kann der obere Dorn des Coextrusionskopfes ein Doppeldorn sein mit einem oberen, durch den zentralen Kanal von oben angeströmten Spitzkegel und einem zweiten unteren Spitzkegel, der von einem ebenfalls in einem zentralen Kanal von unten nach oben geführten Materialstrang angeströmt wird. Auf diesem Doppeldorn werden weitere Materialströme zu je einem Schlauch ausgeformt, wobei der von unten nach oben geführte Materialstrom im Ausformungsprozeß nach unten umgelenkt und bei gleicher Fließrichtung wie derjenigen der Schlauch-Außenschicht später mit dieser vereinigt wird. Der obere und der untere Spitzkegel sind dabei koaxial zueinander angeordnet.

Zur Ausbildung der inneren Schlauchschicht ist ein innerer Anströmring koaxial innerhalb des Doppeldorns angeordnet, dessen zentrale Durchgangsbohrung den unteren zentralen Kanal bildet, durch den der Materialstrang nach oben gegen den unteren Spitzkegel geführt wird. Die Schlauchschicht wird zwischen der Außenwand dieses inneren Anströmringes und der beabstandeten Innenwand des Doppeldorns ausgebildet.

Der erfindungsgemäß vorgesehene Doppeldorn ermöglicht die Ausbildung zweier Schlauchschichten aus einem thermisch empfindlichen Material wie z.B. Hart-PVC bei einem geringen Raumbedarf, wobei der Coextrusionskopf ferner nur eine geringe Anzahl von Bauteilen aufweist. Auch hinsichtlich der Verfahrenstechnik und seiner Fertigung ist der erfindungsgemäße Coextrusionskopf besonders günstig.

Gemäß der vorliegenden Erfindung wird ferner vorgeschlagen, daß der Coextrusionskopf eine Kernhalterplatte aufweist, die die konstruktive Verbindung zwischen dem Kopfgehäuse und sämtlichen innenliegenden Bauteilen herstellt. Dies gilt nicht nur für den Doppeldorn, der sich auf einem Mittelring der Kernhalterplatte abstützt, und den inneren Anströmring, der im mittleren Bereich der Kernhalterplatte gehalten ist, sondern auch für einen unterhalb der Kernhalterplatte angeordneten Mittelringauslauf oder ein stattdessen angeordnetes Verteilerhülsenpaket sowie für einen inneren Kernhalter oder Kern.

Die auf dem Doppeldorn ausgebildeten Schlauchschichten werden durch Ringkanäle in der Kernhalterplatte nach unten geführt, wobei diese Ringkanäle den Mittelring der Kernhalterplatte begrenzen, der durch Stegbrücken mit den angrenzenden Bereichen der Kernhalterplatte verbunden ist. Durch diese Stegbrücken werden sämtliche innen benötigte Materialstränge hindurchgeführt, wobei ihre Fließkanäle innerhalb der Kernhalterplatte lagerichtig umgelenkt werden.

Wenn mit einem derartigen Coextrusiosnkopf eine aus drei Schichten, vorzugsweise drei PVC-Schichten bestehende Schlauchstruktur hergestellt werden soll, ist in der Kernhalterplatte ein weiterer Kanal ausgebildet, der einen seitlich in den Coextrusionskopf eingespeisten Materialstrang zur Mitte der Kernhalterplatte führt und dort nach unten umlenkt, wo der Materialstrang auf den oberen Spitzkegel eines weiteren Dornes auftrifft, der unterhalb der Kernhalterplatte angeordnet ist und die Schlauch-Innenschicht ausformt.

Wenn anstelle des Mittelringauslaufs ein aus vier Hülsen bestehendes Hülsenpaket an der Unterseite des Mittelrings der Kernhalterplatte angeordnet ist, kann mit dem erfindungsgemäßen Coextrusionskopf eine aus fünf Schichten bestehende Schlauchstruktur hergestellt werden, die aus der auf dem Doppeldorn ausgeformten Außen-und Innenschicht aus einem thermisch empfindlichen Material sowie einer mittigen Sperrschicht mit zwei angrenzenden Haftschichten besteht. Die dem Hülsenpaket zugeführten Materialstränge werden wiederum in seitliche Kanäle der Kernhalterplatte eingespeist, durch Stegbrücken in den Mittelring der Kernhalterplatte geführt und dort zum Eintritt in die jeweiligen Verteilerkanäle nach unten umgelenkt.

Eine aus sechs Schichten bestehende Schlauchstruktur ist mit dem erfindungsgemäßen Coextrusionskopf dann herstellbar, wenn der vorstehend beschriebene Kopf zur Herstellung einer Fünf-Schicht-Schlauchstruktur zusätzlich den unterhalb der Kernhalterplatte angeordneten einfachen Dorn aufweist, der auch bei der Herstellung einer aus drei Schichten bestehenden Schlauchstruktur Verwendung findet. Bei der Herstellung einer aus sechs Schichten bestehenden Schlauchstruktur wird unten auf dem Doppeldorn der Strang der Regeneratschicht zu dem gewünschten Schlauch aufgeteilt, während die vorzugsweise aus PVC bestehende Innenschicht auf dem unteren Dorn ausgeformt wird. Zwischen den Hülsen des Hülsenpakets werden wiederum die Sperrschicht sowie die beiden angrenzenden Haftschichten ausgeformt.

Der erfindungsgemäß angeordnete Doppeldorn, der ganzflächig an beiden Seiten von Kunststoffmaterial umströmt ist, gewährleistet bei minimalem Raumbedarf eine problemlose Ausformung von zwei Einzelsträngen zu zwei Schlauchschichten, die selbstverständlich aus unterschiedlichen Materialien bestehen können. Die ferner erfindungsgemäß angeordnete Kernhalterplatte stützt nicht nur den Dorn, sondern stellt die konstruktive Verbindung zwischen dem Kopfgehäuse und allen innenliegenden Bauteilen, also auch eines unteren Dorns oder Kerns und des zugehörigen Kernhalters her. Außerdem enthält die Kernhalterplatte die Zufuhrkanäle für sämtliche innen benötigten Materialstränge.

Weitere Merkmale, Vorteile und Einzelheiten der Erfindung ergeben sich aus der nachfolgenden Beschreibung dreier bevorzugter Ausführungsformen sowie anhand der Zeichnung. Dabei zeigen:

Fig. 1 einen schematischen Längsschnitt durch einen erfindungsgemäßen Coextrusionskopf;

Fig. 2 einen schematischen Längsschnitt durch eine zweite Ausführungsform des erfindungsgemäßen Coextrusionskopfes;

Fig. 3 einen Schnitt entlang der Linie III-III in Fig. 2;

Fig. 4 einen Schnitt entlang der Linie IV-IV in Fig. 2;

Fig. 5 einen schematischen Längsschnitt durch eine dritte Ausführungsform des erfindungsgemäßem Coextrusionskopfes zur Herstellung einer aus drei Schichten bestehenden Schlauchstruktur;

Fig. 6 einen schematischen Länsschnitt durch eine vierte Ausführungsform des Coextrusionskopfes zur Herstellung einer aus fünf Schichten bestehenden Schlauchstruktur und

Fig. 7 einen schematischen Längsschnitt durch eine fünfte Ausführungsform des Coextrusionskopfes zur Herstellung einer aus sechs Schichten bestehenden Schlauchstruktur.

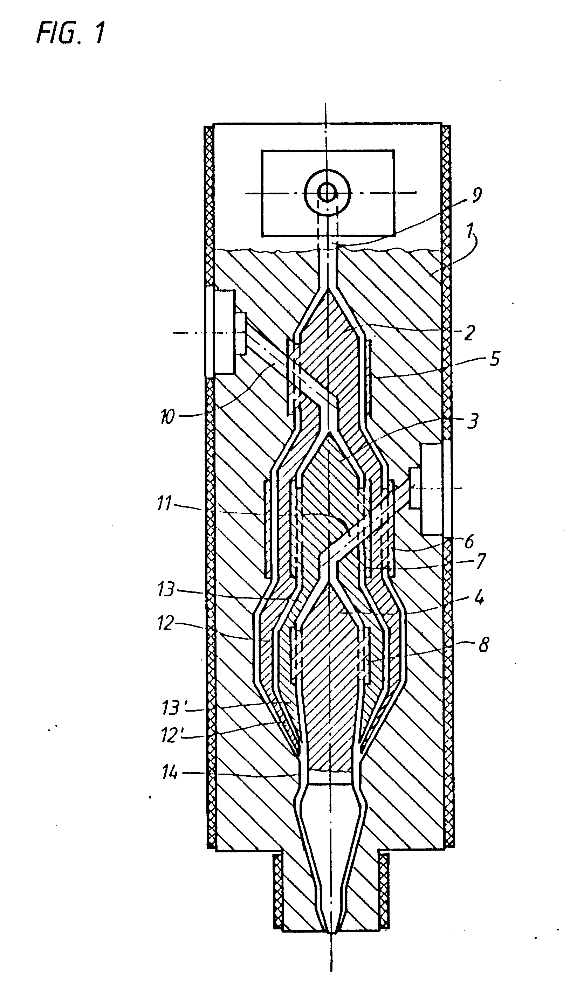

Im Zentrum der Gehäuses 1 des in Fig. 1 dargestellten Coextrusionskopfes sind drei Dorne 2,3 und 4 derart übereinander angeordnet, daß ihre Längsachsen mit der Längsachse des Gehäuses zusammenfallen. Die drei Dorne sind im Gehäuse durch Dornhalter in Form von zwischen sich das Kunststoffmaterial durchfließenlassenden Stegbrücken gehalten. Dabei ist der obere Dorn 2 über eine obere Stegbrücke 5 und eine mittlere Stegbrücke 6 in dem Gehäuse 1 gehalten, während der mittlere Dorn 3 über eine mittlere Skegbrücke 7 in dem oberen Dorn 1 und der untere Dorn 4 über eine untere Stegbrücke 8 in dem mittleren Dorn 3 gehalten sind.

Zur Ausbildung einer aus drei Hart-PVC-Schichten bestehenden Schlauchstruktur wird das Material für die Außenschicht in einem zentralen Kanal 9 oben in den Coextrusionskopf eingespeist und trifft als Materialstrang auf den Spitzenkegel des oberen Dorns 2 auf, wodurch es zu einem Schlauch geformt wird. Das Material für die Mittelschicht wird durch einen seitlichen Kanal 10 eingebracht, der durch die Stegbrücke 5 zum Zentrum des Extrusionskopfes führt, wo der Ka nal 10 vertikal nach unten umgelenkt wird. Hier trifft der Materialstrang auf den Spitzenkegel des mittleren Dorns 3 und erhält seine Schlauchform.

Das Material für die Innenschicht wird durch einen um 180° versetzt angeordneten seitlichen Kanal 11 durch die beiden Stegbrücken 6 und 7 ins Zentrum des Kopfes geführt, wo der Materialstrang vertikal nach unten umgelenkt wird und senkrecht von oben auf den unteren Dorn 4 auftrifft, der den Innenschicht-Schlauch formt.

Der obere Dorn 2 und der mittlere Dorn 3 weisen hülsenförmige Verlängerungen 12 und 13 auf, die bei dem dargegestellten Beispiel sich zunächst nach unten erweitern und in Düsennähe im Durchmesser wieder verringern. Sie erstrekken sich bis in die Nähe des Düseneintrittsbereichs 14, so daß die drei Schläuche bis dahin getrennt geführt werden und sich ungehindert ausbilden können. Die schräg einwärts in Richtung auf die Hülsenachsen verlaufenden Enden 12' und 13' der hülsenförmigen Verlängerungen führen die Schichten im Düseneintrittsbereich 14 zusammen. Der die gleichmäßige Ausbildung der Schläuche beeinträchtigende Einfluß der Stegbrücken ist auf die unmittelbare Umgebung der die Brücken bildenden Haltestege beschränkt und im Bereich der Vereinigung der Schläuche behoben.

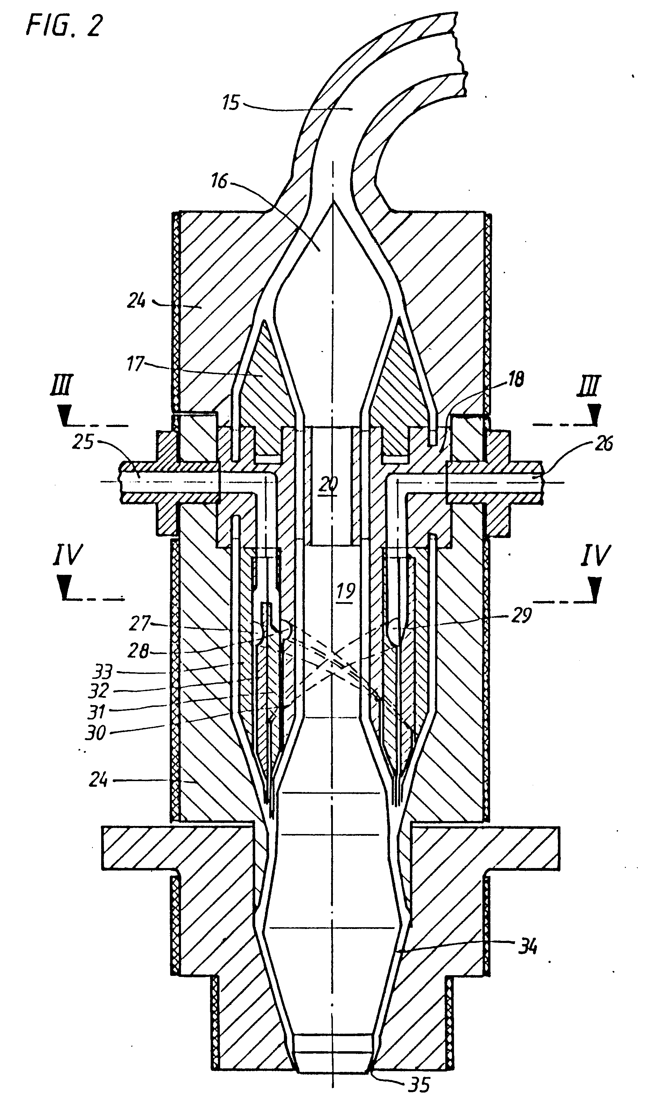

Bei dem in Fig. 2 dargestellten Coextrusionskopf wird wiederum ein Hart-PVC-Strang in einen oberen, an einen nicht dargestellten Extruder anschließenden zentralen Kanal 15 eingeführt, wo der Strang auf einen oberen Dornteil 16 trifft, der einen Hart-PVC-Schlauch ausbildet. Dieser Hart-PVC-Schlauch trifft dann auf eine ringförmige, im Querschnitt dachförmige Abdeckung 17, die auf einem, den Dorn im Gehäuse haltenden Dornhalter 18 sitzt, durch dessen zentralen Nabenteil der den oberen Dornteil 16 und den unteren Dornteil 19 verbindende Bolzen 20 hindurchgeht. Die dach förmige Abdeckung 17 teilt den Schlauch in einen Außenschicht-und einen Innenschicht-Schlauch auf.

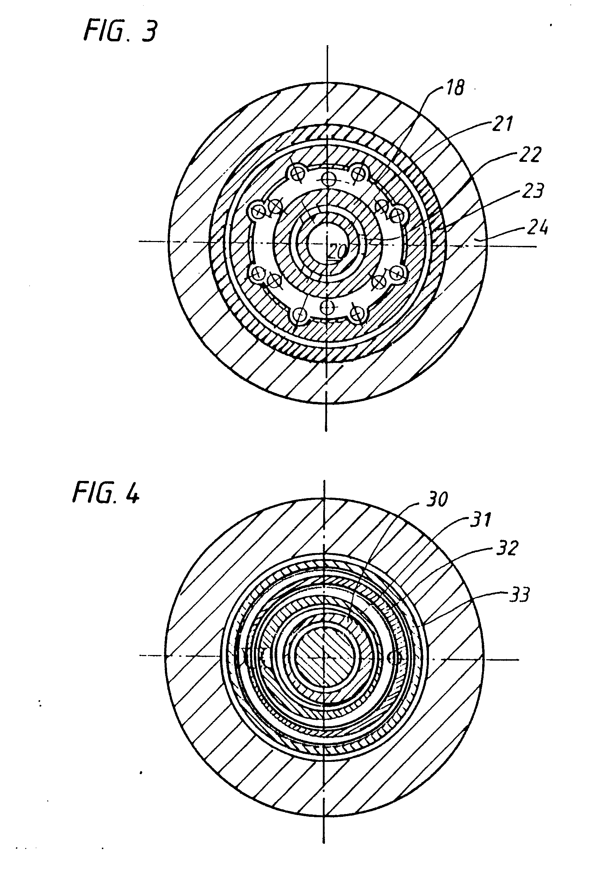

Wie aus den Fig. 1 und 3 zu ersehen ist, ist die innere Nabe 21 des Dornhalters 18 über Stege 22 mit seinem mittleren Teil 18' verbunden, der seinerseits über Stege 23 den mittleren Teil mit dem Außenring 18″ verbindet. Der komplette Dornhalter 18 ist in einer Ausnehmung des Gehäuses 24 des Coextrusionskopfes gehalten.

Ein seitlicher Kanal 25 zur regelmäßig aus einem Extruder kommenden Zufuhr des Materialstranges für eine Innenschicht, z.B. die Haftschicht, und ein um 180° versetzt angeordneter Kanal 26 zur Zufuhr des Materialstranges für eine weitere Innenschicht, z.B. die Sperrschicht, erstrecken sich waagerecht durch die äußeren Stege 23 und werden vertikal nach unten umgelenkt, um in Verteilerkanäle 27,28 und 28 einzumünden.

Der Dornhalter 18 weist an seiner Unterseite einer verlängerten Ringabschnitt 30 auf, in den der Verteilerkanal 28 in Form einer Herzkurve eingefräst ist. Auf diesen Ringabschnitt 30 sind drei konzentrisch angeordnete Hülsen 31, 32 und 33 aufgeschoben, wobei in die Außenflächen der Hülsen 31 und 32 die Verteilerkanäle 29 und 27 eingefräst sind. Die äußere Hülse 33 deckt die mittlere Hülse 32 ab und dient außerdem dazu, den Außenschicht-Schlauch zu führen. Die Hülsen 31 bis 33 sind über Schrauben an dem Ringabschnitt 30 befestigt.

Der Kanal 25 verzweigt sich im Bereich der inneren und der mittleren Hülse 31,32 und mündet in die Verteilerkanäle 27,28 ein, wie auch aus Fig. 4 zu ersehen ist. Der seitliche Kanal 26 mündet in den Verteilerkanal 29 ein.

Die auf diese Weise ausgebildeten Schläuche werden an einer gemeinsamen Einmündung 34 zusammengeführt und vereinigt, wo die Sperrschicht und die beiden Haftschichten zwischen die beiden Hart-PVC-Schichten aufgenommen werden, bevor die Schlauchstruktur durch die Düse 35 aus dem Coextrusionskopf austritt.

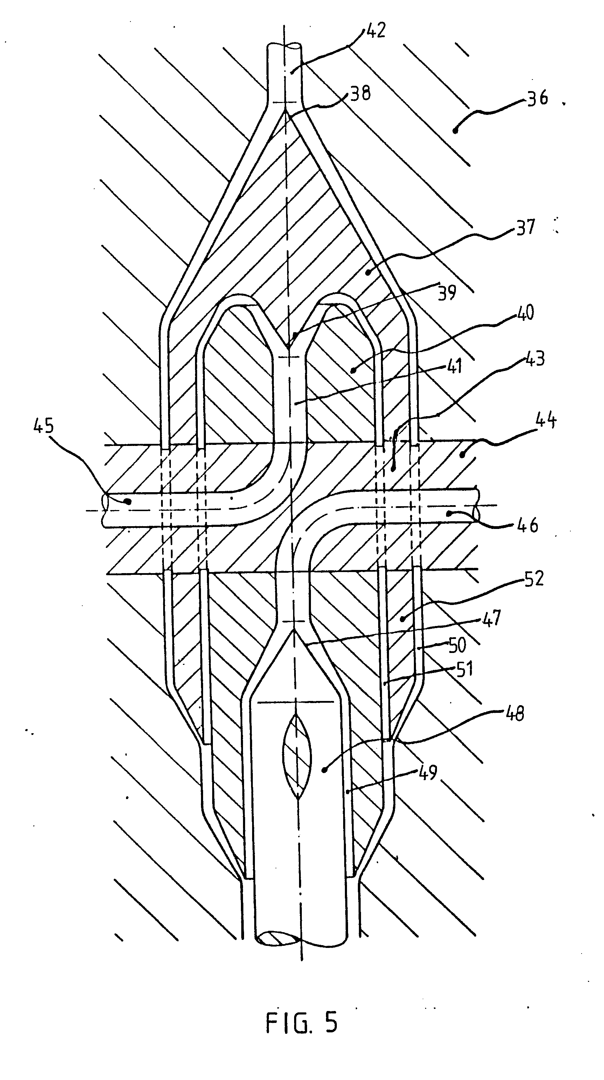

Der in Fig. 5 dargestellte Coextrusionskopf hat im Zentrum des Gehäuses 36 einen Doppeldorn 37 mit einem oberen Spitzkegel 38 und einem unteren Spitzkegel 39, die koaxial zueinander ausgebildet sind. Innerhalb des Doppeldorns 37 ist koaxial zu diesem ein innerer Anströmring 49 angeordnet, der den unteren zentralen Kanal 41 begrenzt, durch den ein Materialstrang gegen den unteren Spitzkegel 39 geführt und dort zu einem Schlauch aufgeteilt wird, der zwischen dem inneren Anströmring 40 und dem Doppeldorn 37 ausgebildet wird.Der obere Spitzkegel 38 teilt einen Materialstrang auf, der durch einen oberen zentralen Kanal 42 zugeführt wird.

Der Doppeldorn 37 stützt sich umlaufend auf einem Mittelring 43 einer Kernhalterplatte 44 ab, die auch den inneren Anströmring 40 hält. Der Mittelring 43 ist durch in der Figur nicht dargestellte Stegbrücken mit den benachbarten Abschnitten der Kernhalterplatte 44 verbunden.

Durch diese Stegbrücken führen zwei seitliche Kanäle 45 und 46 zur Mitte der Kernhalterplatte 44, wo der Kanal 45 nach oben umgelenkt wird und in den unteren zentralen Kanal 41 einmündet, der seinen Materialstrang gegen den unteren Spitzkegel 39 führt. Der Kanal 46 wird im Zentrum der Kernhalterplatte 44 nach unten umgelenkt und führt seinen Materialstrang gegen einen Spitzkegel 47 des inneren Kernhalters 48, auf dem die Innenschicht 49 der aus drei Schichten bestehenden Schlauchstruktur herge stellt wird. Die Innenschicht 49 besteht ebenso wie die beiden auf dem Doppeldorn 37 ausgebildeten Schichten 50 und 51 aus einem thermisch instabilen Material. Die beiden Schichten 50 und 51 werden am unteren Ende eines unten an dem Mittelring 43 der Kernhalterplatte 44 anschließenden Mittelringauslaufs 52 zusammengeführt, bevor sie sich mit der Innenschicht 49 zu der Dreischicht-Schlauchstruktur vereinigen.

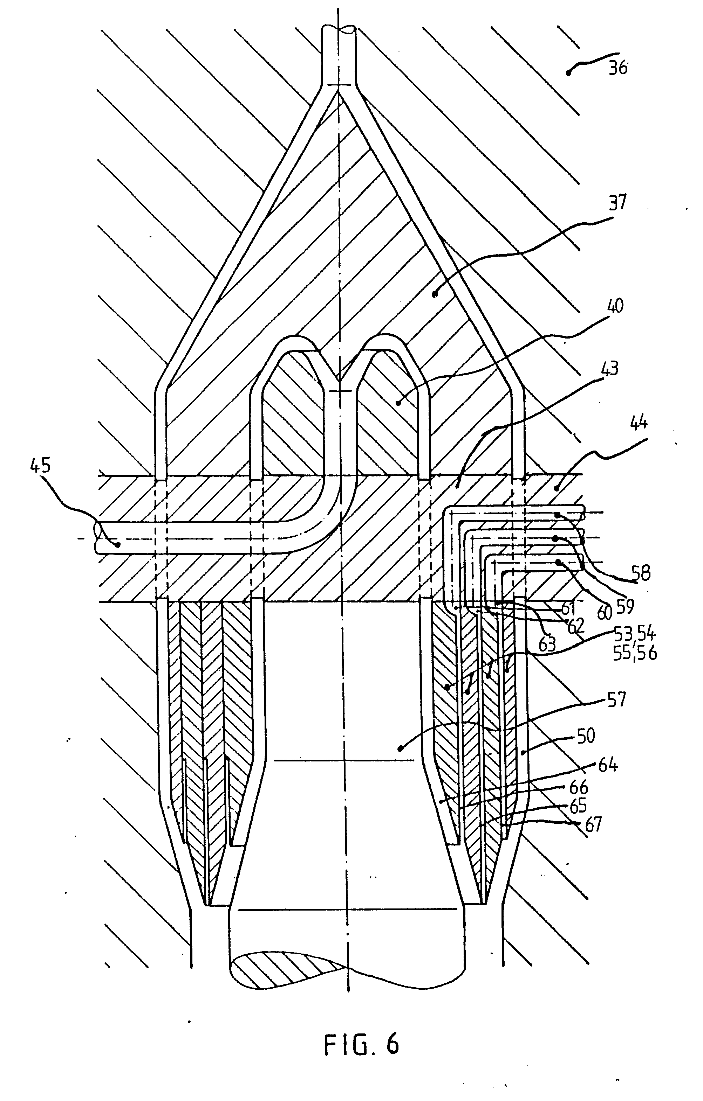

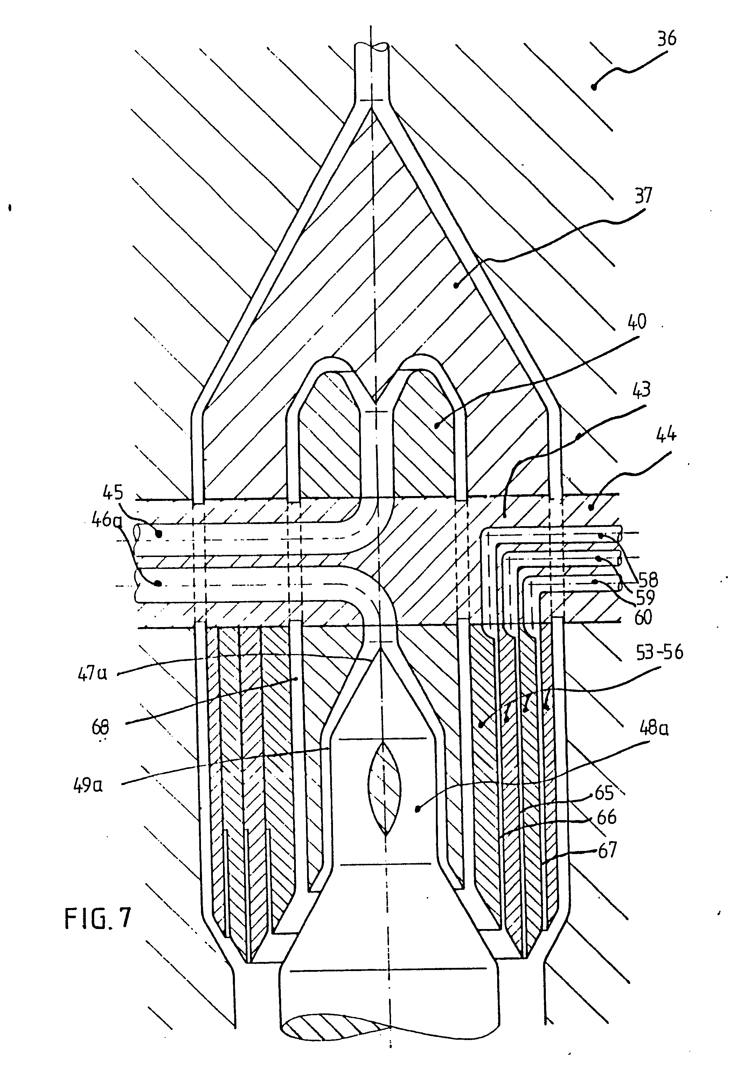

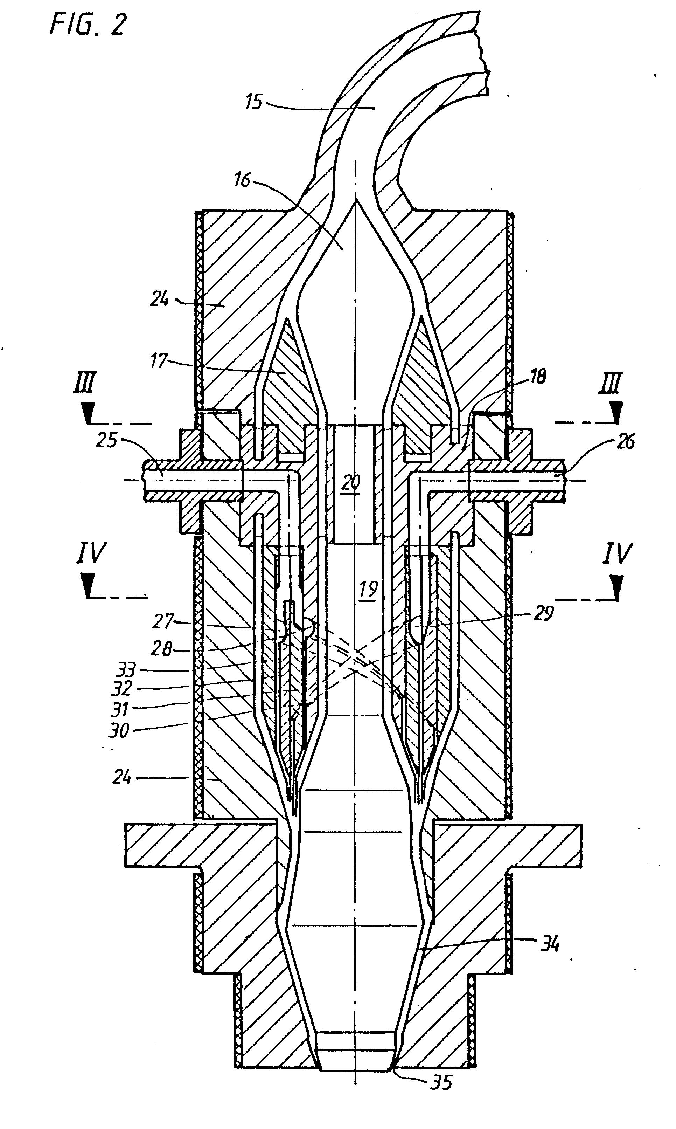

In den Figuren 6 und 7 sind diejenigen Bauteile, die Bauteilen der Fig. 5 entsprechen, mit denselben Bezugszeichen gekennzeichnet. Bei dem in Figur 6 dargestellten Extrusionskopf ist der Mittelringauslauf 52 durch ein aus vier Hülsen 53-56 bestehendes Hülsenpaket ersetzt, das an der Unterseite des Mittelrings 43 der Kernhalterplatte 44 anschließt. Anstelle des unteren Dornes 48 ist ein Kern 47 angeordnet, der ebenfalls mit der Kernhalterplatte 44 verbunden ist. In der Kernhalterplatte 44 sind zur Zufuhr von Materialsträngen zu dem Hülsenpaket 53-56 seitliche Kanäle 58-60 ausgebildet, die durch Stegbrücken in den Mittelring 43 der Kernhalterplatte führen und dort zum Eintritt in Verteilerkanäle 61 bis 63 nach unten umgelenkt werden. Bei der in Fig. 6 dargestellten Ausführungsform des Coextrusionskopfes wird eine aus fünf Schichten bestehende Schlauchstruktur hergestellt, die eine Außenschicht 50 und eine Innenschicht 64 aus einem thermisch empfindlichen Material sowie eine mittige Sperrschicht 65 mit daran anschließenden Haftvermittlerschichten 66 und 67 aufweist.

Der in Fig. 7 dargestellte Coextrusionskopf enthält zusätzlich zu demjenigen gemäß Fig. 6 den bereits aus der Ausführungsform gemäß Fig. 5 bekannten unteren Dorn bzw. Kernhalter 48a, dessen Spitzkegel 47a den durch den seitlichen Kanal 46a zugeführten Materialstrang zu einem die Innenschicht bildenden Schlauch 49a aufteilt. Der untere Spitzkegel 39 des Doppeldorns 37 teilt bei dieser Ausführungsform den Regeneratschichtstrang zu einem Schlauch 68 auf, der mit dem Schlauch 49a zusammengeführt wird. Zwischen den Hülsen 53-56 werden wie bei dem vorangegangenen Ausführungsbeispiel eine mittige Sperrschicht 65 sowie die beidseitigen Haftvermittlerschichten 66 und 67 ausgeformt. Die Außenschicht 50 und die Innenschicht 49a bestehen wiederum aus einem thermisch empfindlichen Material.

**Ansprüche**

1. Coextrusionskopf zur Herstellung einer aus wenigstens zwei, vorzugsweise drei bis sechs Schichten bestehenden Kunststoff-Schlauchstruktur, deren Außenschicht und Innenschicht aus einem thermisch empfindlichen Material, z.B. Hart-PVC bestehen, zwischen denen entweder eine weitere Schicht aus diesem Material als Mittelschicht oder eine oder mehrere Schichten anderen Materials, wie Sperrschicht, Haftvermittlerschichten und Regeneratschichten angeordnet sein können, dadurch **gekennzeichnet**, daß ein wenigstens die Außenschicht bildender erster Materialstrang in einen zentralen Kanal (9, 15, 42) oben in den Coextrusionskopf eingespeist und auf einem oberen Dorn (2, 16, 37) zu einem Schlauch geformt wird und daß wenigstens ein weiterer Materialstrang für wenigstens eine weitere Schicht in einem seitlichen Kanal (10, 11, 25, 26, 45, 46, 58, 59, 60) in den Kopf eingespeist und ins Innere des Außenschicht-Schlauches geführt wird.

2. Coextrusionskopf nach Anspruch 1, dadurch **gekennzeichnet**, daß der seitliche Kanal (10, 11, 25, 26) durch eine Stegbrücke (5, 6, 7, 23) in einem Dornhalter verläuft.

3. Coextrusionskopf nach Anspruch 1 oder 2, dadurch **gekennzeichnet**, daß sowohl der Materialstrang für die Mittelschicht als auch der Materialstrang für die Innenschicht in seitlichen Kanälen (10, 11) in den Kopf eingespeist werden.

4. Coextrusionskopf nach Anspruch 3, dadurch **gekennzeichnet**, daß der Kanal (10) für den Materialstrang der Mittelschicht durch eine erste, im oberen Bereich des oberen Dornes (2) mit diesem verbundene Stegbrücke (5) zur Kopfmitte führt, wo der Strang von einem mittleren Dorn (3) zu einem Schlauch geformt wird, und daß der Kanal (11) für den Materialstrang der Innenschicht durch zwei weitere Stegbrücken (6, 7) die die beiden Schläuche überbrücken und im oberen Bereich des mittleren Dornes (3) angeordnet sind, zur Kopfmitte führt, wo der Strang von einem unteren Dorn (4) zu einem Schlauch geformt wird.

5. Coextrusionskopf nach Anspruch 3 oder 4, dadurch **gekennzeichnet**, daß die beiden seitlichen Kanäle (10,11) um 180° versetzt angeordnet sind.

6. Coextrusionskopf nach einem der Ansprüche 3 bis 5, dadurch **gekennzeichnet,** daß der obere und der mittlere Dorn (2,3) hülsenförmige Verlängerungen (12, 13) aufweisen, die die Schläuche im Düseneintrittsbereich (14) zusammenführen.

7. Coextrusionskopf nach Anspruch 1, dadurch **gekennzeichnet,** daß ein Dornhalter (18) eine obere ringförmige, im Querschnitt dachförmige Abdeckung (17) aufweist, die den Schlauch in zwei konzentrische Schläuche aufspaltet, die die Innenschicht und die Außenschicht der herzustellenden Schlauchstruktur bilden.

8. Coextrusionskopf nach dem Anspruch 7, dadurch **gekennzeichnet,** daß äußere Stege (23) den mittleren Teil (18') des Dornhalters (18) mit seinem, den Dorn (16, 19) in dem Gehäuse (24) des Coextrusionskopfes haltenden Außenring (18") verbinden und daß sich zwei seitliche Kanäle (25,26), die die Materialstränge für die Innenschichten, z.B. Sperrschicht und Haftschichten zuführen, durch die Stege (23) in den Zwischenraum zwischen den beiden konzentrischen Schläuchen erstrecken.

9. Coextrusionskopf nach Anspruch 8, dadurch **gekennzeichnet,** daß der radial innere Bereich des Dornhalters (18) in Richtung der Unterseite des Extrusionskopfes verlkängert ist und daß in den verlängerten Ringabschnitt (30) ein Verteilerkanal (28) in Form einer Herzkurve zur Ausbildung einer inneren Schicht, z.B. eines Haftvermittlerschicht-Schlauches eingeformt ist.

10. Coextrusionskopf nach Anspruch 9, dadurch **gekennzeichnet,** daß auf den verlängerten Ringabschnitt (30) ein aus drei Hülsen (31,32,33) bestehendes Hülsenpaket aufgeschoben ist, wobei die innere und die mittlere Hülse (31,32) je einen in ihre Außenfläche eingeformten Verteilerkanal (29,27) in Form einer Herzkurve aufweisen und der Verteilerkanal (29) der inneren Hülse (31) der Ausbildung eiens Sperrschicht-Schlauches und der Verteilerkanal (27) der mittleren Hülse (32) der Ausbildung eines äußeren Haftvermittlerschicht-Schlauches dienen.

11. Coextrusionskopf nach Anspruch10, dadurch **gekennzeichnet,** daß die äußere Hülse (33) die mittlere Hülse (32) abdeckt und gleichzeitig die innere Begrenzung für den Außenschicht-Schlauch bildet.

12. Coextrusionskopf nach einem der Ansprüche 1 und 7, bis 11, dadurch **gekennzeichnet,** daß die beiden seitlichen Zufuhrkanäle (25,26) sich von außen nach innen zunächst horizontal erstrecken und etwa in der Mitte des Dornhalters (18) senkrecht umgelenkt werden, derart, daß ihre Achsen in der Berührungsfläche der inneren und der mittleren Hülse (31,32) liegen.

13. Coextrusionskopf nach Anspruch 12, dadurch **gekennzeichnet,** daß die beiden seitlichen Zufuhrkanäle (25,26) um 180° versetzt zueinander angeordnet sind.

14. Coextrusionskopf nach einem der Ansprüche 8 bis 13, dadurch **gekennzeichnet,** daß sich der untere Endabschnitt des den Materialstrang für die Haftvermittlerschichten führenden Kanals (25) so verzweigt, daß die Verzweigungen in der Verteilerkanale (27,28) einmünden, während der den Materialstrang für die Sperrschicht führende Kanal (26) in den Verteilerkanal (29) einmündet.

15. Coextrusionskopf nach Anspruch 1, dadurch **gekennzeichnet,** daß der oberen Dorn ein Doppeldorn (37) ist mit einem oberen Spitzkegel (38), der von dem in dem oberen zentralen Kanal (42) geführten, die Schlauch-Außenschicht (50) bildenden Materialstrang angeströmt wird, und einem unteren Spitzkegel (39), der von einem in einem unteren zentralen Kanal (41) in entgegengesetzter Richtung geführten Materialstrang angeströmt wird, wobei der Doppeldorn (37) beide Materialströme zu je einem Schlauch (59, 51, 64, 568) ausformt und der von unten nach oben geführte Materialstrom bereits im Ausformungsprozeß an dem Doppeldorn (37) nach unten umgelenkt wird, bevor er sich mit dem anderen Materialstrom vereinigt.

16. Coextrusionskopf nach Anspruch 15, dadurch **gekennzeichnet,** daß der obere und der untere Spitzkegel (38, 39) koaxial zueinander angeordnet sind.

17. Coextrusionskopf nach Anspruch 15 oder 16, dadurch **gekennzeichnet,** daß der untere zentrale Kanal (41) mittig durch einen inneren Anströmring (40) nach oben geführt ist, der koaxial innerhalb des Doppeldorns (37) angeordnet ist, wobei die innere Schlauchschicht (51, 64) zwischen der Außenwand des inneren Anstromringes (40) und der Innenwand des Doppeldornes (37) ausgebildet wird.

18. Coextrusionskopf nach einem der Ansprüche 15 bis 17, dadurch **gekennzeichnet,** daß sich der Doppeldorn umlaufend auf einem Mittelring (43) einer Kernhalterplatte (44) abstützt, auf der auch der innere Anströmring (40) gehalten ist.

19. Coextrusionskopf nach einem der Ansprüche 15 bis 18, dadurch **gekennzeichnet,** daß die beiden Schlauchschichten (50, 51) durch die Kernhalterplatte (44) und danach zwischen einem unten an dem Mittelring (43) der Kernhalterplatte (44) anschließenden Mittelringauslauf (52) und dem Kopfgehäuse (36) einerseits sowie einem Kern (57) oder Kernhalter andererseits geführt werden, bevor sie sich am unteren Ende des Mittelringauslaufs (52) vereinigen.

20. Coextrusionskopf nach einem der Ansprüche 15 bis 19, dadurch **gekennzeichnet**, daß der Materialstrang für den unteren zentralen Kanal (41) in einem in der Kernhalterplatte (44) liegenden seitlichen Kanal (45) in den Coextrusionskopf eingespeist wird, wobei der Kanal (45) durch Stegbrücken zur Mittel der Kernhalterplatte (44) führt und dort nach oben umgelenkt wird.

21. Coextrusionskopf nach einem der Ansprüche 15 bis 20, dadurch **gekennzeichnet**, daß ein aus vier Hülsen (53-56) bestehendes Hülsenpaket an den Unterseite des Mittelrings (43) der Kernhalterplatte (44) angeordnet ist und daß die inneren drei Hülsen (53-55) je einen in ihre Außenfläche eingeformten Verteilerkanal (61-6) in Form einer Herzkurve aufweisen und eine mittige Sperrschicht (65) sowie angrenzende Haftschichten (66, 67) ausbilden, die zwischen den am Doppeldorn (37) ausgebildeten Schichten (50, 64) geführt und mit diesen am unteren Ende der Hülsen (53-56) zusammengeführt werden.

22. Coextrusionskopf nach Anspruch 21, dadurch **gekennzeichnet**, daß die dem Hülsenpaket (53, 56) zugeführten Materialstränge in in der Kernhalterplatte (44) liegenden seitlichen Kanälen (58-60) in den Coextrusionskopf eingespeist, durch Stegbrücken in den Mittelring (43) der Kernhalterplatte (44) und dort zum Eintritt in den jeweiligen Verteilerkanal (61-63) nach unten umgelenkt werden.

23. Coextrusionkopf nach einem der Ansprüche 15 bis 22, dadurch **gekennzeichnet**, daß ein weiterer Materialstrang in einem in der Kernhalterplatte (44) liegenden seitlichen Kanal (46, 46a) in den Coextrusionskopf eingespeist, durch Stegbrücken zur Mitte der Kernhalterplatte geführt und dort nach unten umgelenkt wird, woraufhin der Materialstrang auf dem oberen Spitzkegel (47, 47a) eines koaxial zu dem Doppeldorn (37) unterhalb der Kernhalterplatte angeordneten Dornes (48a) zu der Schlauch-Innenschicht (49, 49a) geformt wird.

FIG. 1

FIG. 2

0 279 321

FIG. 3

18
21
22
23
24

FIG. 4

30
31
32
33

FIG. 5

FIG. 6

0 279 321

FIG. 7

FIG. 2

0 279 321